# EUROPÄISCHE PATENTSCHRIFT

(11) **EP 2 099 719 B1**
(45) Veröffentlichungstag und Bekanntmachung des Hinweises auf die Patenterteilung: **20.10.2010**
(21) Anmeldenummer: 07846829.5
(22) Anmeldetag: 27.11.2007
(51) Int. Cl.: C03B 7/098, C03B 5/26

(54) **VERFAHREN UND VORRICHTUNG ZUM ABZUG VON GLASSCHMELZE AUS FLIESSKANÄLEN**
METHOD AND DEVICE FOR EXTRACTING GLASS MELT FROM FLOW CHANNELS
PROCÉDÉ ET DISPOSITIF D'EXTRACTION DE VERRE FONDU DANS DES CANAUX D'ÉCOULEMENT

(30) Priorität: 07.12.2006 DE 102006058044
(43) Veröffentlichungstag der Anmeldung: 16.09.2009
(73) Patentinhaber: Beteiligungen Sorg GmbH & Co. KG, D-97816 Lohr am Main (DE)
(72) Erfinder: GRÖSSLER, Jürgen, 97753 Karlstadt-Karlburg (DE)
(74) Vertreter: Zapfe, Hans
(86) Internationale Anmeldenummer: PCT/EP2007/010264
(87) Internationale Veröffentlichungsnummer: WO 2008/067929

(56) Entgegenhaltungen:
- DE-A1- 2 461 700
- DE-A1- 4 006 229
- DE-A1- 19 935 664
- GB-A- 888 956

## Beschreibung

Die Erfindung betrifft ein Verfahren zum Abzug von Glasschmelze aus Fliesskanälen, die zum Transport von Produktionsglas von einem Schmelzofen zu einer Entnahmestelle für das Produktionsglas geführt sind wobei der Fliesskanal einen glasresistenten Innenbelag aufweist, der auf seiner Aussenseite von einem Mantel aus einem mineralischen Wärmedämmstoff umgeben ist, und wobei der Entnahmestelle für das Produktionsglas eine Dränageeinrichtung für Bodenglas vorgeschaltet ist.

Zur Bewertung des Standes der Technik und der Erfindung ist es angebracht, einerseits auf die konstruktiven Elemente von beheizten Fliesskanälen, die auch als Speiser oder Vorherde bezeichnet werden, und andererseits auf die Komponenten der Strompfade und die dadurch bedingten Wärmeentwicklungen in solchen Fliesskanälen näher einzugehen.

Sowohl die mineralischen Innenflächen der Fliesskanäle als auch die metallischen Aussenflächen von Heizelektroden haben die Eigenschaft, von den üblichen Glasschmelzen mehr oder weniger stark angegriffen zu werden, wobei die Reaktionsprodukte schwerer sind als die Glasschmelzen und sich als unreines Bodenglas auf dem Boden des Fliesskanals ansammeln. Besonders schädlich sind hierbei die Reaktionsprodukte des Glases mit Metallelektroden, die unmittelbar in die Glasschmelze eintauchen. In dem Bodenglas lagern sich auch andere Verunreinigungen wie Steinchen und Knoten ab.

Die über dem Bodenglas befindliche Glasschmelze, die für die Herstellung von Produkten vorgesehen ist, wird daher als Produktionsglas bezeichnet. Dieses wird entweder kontinuierlich, z.B. für die Herstellung von Flachglas, oder portionsweise, z.B. als Tropfen oder "Gobs" für die Herstellung von Flaschen und Trinkgefässen von einer Entnahmestelle abgezogen.

Wird das Bodenglas, das durch eine Phasengrenze vom Produktionsglas getrennt ist, nicht kontinuierlich oder intermittierend vor der besagten Entnahmestelle für das Produktionsglas durch eine Dränageöffnung entfernt, so wird das Produktionsglas durch das Bodenglas verunreinigt und unbrauchbar. Dies führt unter anderem zur Beeinträchtigung der Transparenz, beispielsweise durch Verfärbung und/oder durch die Bildung von Schlieren, die wegen ihres Aussehens in Fachkreisen auch als "Cat-Scratches" bezeichnet werden.

Ein weiterer Problemkreis liegt in der Auswahl und der Raumform der mineralischen Werkstoffe des Fliesskanals, auch in geometrischer Raumlage zu den Elektroden. Besteht der Innenbelag des Fliesskanals in an sich bekannter Weise aus einem schmelzgegossenen Werkstoff aus der Gruppe der AZS- oder ZAC-Werkstoffe, auch bekannt als Dreistoff-Systeme, wie z. B. Al₂O₃-ZrO₂-SiO₂, so liegt dessen elektrische Leitfähigkeit bei etwa dem 20-fachen Wert üblicher mineralischer Werkstoffe, wie sie für den wärmeisolierenden Mantel des Fliesskanals verwendet werden. Dies hat zur Folge, dass die Strompfade bevorzugt durch solche Werkstoffe verlaufen, wobei aber wiederum die Raumform der Werkstoffe und die Raumkoordinaten dieser Strompfade, ausgehend von der jeweiligen Elektrode, innerhalb dieser Werkstoffe sowie die übergänge und Verläufe der Strompfade zur und in der Glasschmelze zu bestimmen sind. Diese aber stehen wiederum in Wechselwirkungen mit den Raumkoordinaten der Temperaturen.

Daraus ergeben sich dann auch die Verhältnisse zwischen den durch die mineralischen Werkstoffe einerseits und durch die Glasschmelze andererseits fliessenden anteiligen Stromstärken und die davon wiederum abhängigen örtlichen Heizleistungen. Die elektrischen Leitfähigkeiten bzw. die spezifischen Widerstände sowohl für das Glas als auch für die mineralischen Baustoffe sind in einem Temperaturbereich zwischen 700 und 1700 °C extrem temperaturabhängig, und zwar über mehrere Zehnerpotenzen. Die Ergebnisse beruhen daher auf sehr zahlreichen, intensiven und kostenträchtigen Untersuchungen, bis eine optimale Lösung gefunden wird. Dabei spielt auch die Geschwindigkeit von Temperaturänderungen im Bereich der Dränageöffnung eine Rolle.

Durch die HVG-Mitteilung Nr. 1671 und einen Vortrag vom 20. April 1988 sowie die DE 40 06 229 C2 ist es bekannt, in einem Speiser einer Glasschmelzanlage einem Bodenauslauf für geschmolzenes Produktionsglas und dessen Endprodukte eine sogenannte Dränageöffnung (einen zweiten Bodenauslauf) für Bodenglas vorzuschalten, das in den Endprodukten Schlieren, sogenannte "Cat Scratches", erzeugen würde. Dazwischen kann auch eine Bodenschwelle vorgesehen sein, die den übertritt des schwereren Bodenglases zum Produktauslauf verhindern soll. Unmittelbar zugehörige Beheizungen, deren Regelung und Raumkoordinaten von Temperaturen sind jedoch nicht angesprochen.

Durch die EP 0 329 930 B1 aus 1989 und den Aufsatz von H. Lutz mit dem Titel "CONTI-DRAIN, eine Lösung von Sorg bei zirkonhaltigen Schlieren in der Produktion", veröffentlicht in Glas-Ingenieur 1.99, Seiten 47 bis 50, ist es weiterhin bekannt, unter einer Düse für den Auslauf des zirkonhaltigen, Schlieren bildenden Bodenglases eine Elektrode für den Anschluss an einen Transformator mit Wechselstromsteller anzuordnen, wobei die Leistung durch einen Sensor temperaturabhängig geregelt wird, der in der Nähe des Bodenauslaufs angeordnet ist. Es ist jedoch ausdrücklich angegeben, dass eine Gegenelektrode direkt in der Glasschmelze angeordnet sein muss. Da für diese Gegenelektroden jedoch ein - wenn auch hochschmelzendes - Metall wie Molybdän verwendet werden muss, lässt es sich nicht vermeiden, dass diese Elektroden im Glas allmählich in Lösung gehen, was bekannt ist und zu Verunreinigungen des Glases führt. Dies ist wiederum kontraproduktiv und es wird gewissermassen der Teufel mit dem Beelzebub ausgetrieben. Diese Dokumente bezeichnen die Beherrschbarkeit der Zusammenhänge auch als vage und weitgehend ungeklärt und unvollkommen.

Hierzu ist noch folgendes zu bemerken: Die direkte elektrische Beheizung mit Metallelektroden wie Molybdän- oder Zirkoniumelektroden ist vor allem bei Weissglas nicht unproblematisch. An der Oberfläche der Elektroden finden komplexe Reaktionen statt, die zur Bildung einer Kontaktschicht führen, Diese Schicht besteht aus mehreren Komponenten, hauptsächlich jedoch aus Verbindungen zwischen den Metallen und Sauerstoff bzw. Schwefel. Obwohl es sich prinzipiell um eine dünne Schicht handelt, können Veränderungen in den Betriebsbedingungen dazu führen, dass ein Teil der Schicht abgetragen wird und im Produktionsglas als dunkle Schmiere erscheint. Oft treten auch Sauerstoffblasen bei diesen Reaktionen als zeitgleiche oder Folgeerscheinung auf.

Nun ist es zwar durch die DE 24 61 700 C3 seit 1974 bekannt, Metallelektroden der direkten Einwirkung des Glases zu entziehen und stattdessen zwischen den Elektroden und der Glasschmelze bestimmte keramische Auskleidungen bzw. lnnenbeläge der Speiser, branchenüblich als ZAC bezeichnet, zu benutzen. Die elektrischen Widerstände solcher keramischen Werkstoffe haben einen negativen Temperaturkoeffizienten, d.h. die Leitfähigkeiten nehmen mit steigender Temperatur zu, wie bei Glas auch. Bei ungleichmässigen Temperaturverteilungen durch Veränderung thermischer Gleichgewichte zwischen Beheizung und Kühlung ergeben sich jedoch sehr unterschiedliche Raumkoordinaten für die einzelnen Strompfade. Einige Strompfade zwischen Elektroden hinter und unter den Oberflächenbereichen der Ausmauerung sind zwar angegeben, nicht jedoch die Strompfade und deren Steuerungs- und Regelungsmöglichkeiten zu einer ringförmigen Elektrode, die unterhalb des Bodenauslaufs für das Produktionsglas angeordnet ist. Eine vorgeschaltete und beheizbare Dränageöffnung ist jedoch nicht angesprochen.

Durch die DE 2 017 096 A1 ist es bekannt, zum regelbaren Austrag von Glas unterhalb einer Bodenöffnung eines Speisers eine vertikale koaxiale Reihenanordnung von ringförmigen Elektroden anzuordnen, durch die auch noch ein konzentrischer Elektrodenstab hindurch geführt werden kann. Als Werkstoff für die Elektroden ist Molybdän angegeben ist, das auch mit der Schmelze in Berührung kommt, wenn auch nur nach Verlassen des Speisers. Es ist auch angegeben, dass ein solches System entweder unter einem Speiser zur Dränage des Oberflächenglases, also des Produktionsglases, oder am Wannenboden zur Dränage des Bodenglases angebracht werden kann. Die praktische Erfahrung hat jedoch gezeigt, dass eine solche Wahlmöglichkeit wegen der unterschiedlichen Vorgaben am Einsatzort nicht gegeben ist. Insbesondere fehlt bei einem solchen System trotz des Glaskontaktes die weitreichende thermische Rückwirkung in den Schmelzenstrom im Speiser bzw. im Fliesskanal.

Der Erfindung liegt demgegenüber die Aufgabe zugrunde, ein Verfahren zum Abzug von Glasschmelze aus Fliesskanälen und eine Vorrichtung hierfür mit Elektroden anzugeben, die sowohl mit einer Dränageöffnung und deren ringförmiger Gegenelektrode in elektrischer und thermischer Wechselwirkung stehen, bei denen die Elektroden einerseits dem unmittelbaren Einfluss der Glasschmelze entzogen sind, bei denen die wirksamen Elektrodenenden aber dennoch einen örtlichen und zeitlichen Einfluss auf das Temperaturprofil innerhalb des Strömungsquerschnitts der Glasschmelze im Fliesskanal und/oder über der Dränageöffnung haben.

Die Lösung der gestellten Aufgabe erfolgt bei dem eingangs angegebenen Verfahren erfindungsgemäss dadurch, dass
a) der Innenbelag mindestens im Bereich der Dränageeinrichtung aus einem schmelzgegossenen, elektrisch leitfähigen mineralischen Werkstoff aus der Gruppe der AZS- und der ZAC-Verbindungen besteht, wobei in dem Innenbelag eine Dränageöffnung für das Bodenglas und über dieser Dränageöffnung ein Dränagespalt angeordnet ist, der sich quer zur Fliessrichtung erstreckt, und dass
b) mindestens zwei Elektroden auf gegenüber liegenden Seiten des Fliesskanals und der Dränageeinrichtung für das Bodenglas angeordnet sind, die stabförmig ausgebildet und mit ihren Stirnflächen so weit in den Innenbelag in Richtung auf die Glasschmelze eingeführt sind und keinen Kontakt zur Glasschmelze haben, wobei der Innenbelag auch im Bereich der stabförmigen Elektroden aus AZS- oder ZAC-Verbindungen besteht, derart, dass der überwiegende Teil der Stromflüsse durch die Glasschmelze geführt wird und eine Elektrodenplatte, die unterhalb der Dränageöffnung angeordnet ist, auf diesem Wege erreicht, derart, dass das Bodenglas stärker beheizt wird als das darüber befindliche Produktionsglas.

Hierdurch wird die gestellte Aufgabe in vollem Umfange gelöst. Insbesondere werden die Elektroden einerseits dem unmittelbaren Einfluss der Glasschmelze entzogen, andererseits haben die wirksamen Elektrodenenden aber dennoch einen örtlichen und zeitlichen Einfluss auf den Verlauf der Strompfade und das Temperaturprofil innerhalb des Strömungsquerschnitts der Glasschmelze im Fliesskanal und/oder über der Dränageöffnung.

Es ist im Zuge weiterer Ausgestaltungen des erfindungsgemässen Verfahrens besonders vorteilhaft, wenn - entweder einzeln oder in Kombination - :
* die gegenüber liegenden Elektroden oberhalb einer virtuellen waagrechten Ebene angeordnet sind, in der im Fliesskanal eine Phasengrenze zwischen dem Produktionsglas und dem Bodenglas gehalten wird, und/oder, wenn
* die gegenüber liegenden Elektroden unterhalb einer virtuellen waagrechten Ebene angeordnet sind, in der im Fliesskanal eine Phasengrenze zwischen dem Produktionsglas und dem Bodenglas gehalten wird.

Die Erfindung betrifft auch eine Vorrichtung für den Abzug von Glasschmelze aus Fliesskanälen, die zum Transport von Produktionsglas von einem Schmelzofen zu einer Entnahmestelle für das Produktionsglas geführt sind, wobei der Fliesskanal einen glasresistenten Innenbelag aufweist, der auf seiner Aussenseite von einem Mantel aus einem mineralischen Wärmedämmstoff umgeben ist, und wobei der Entnahmestelle für das Produktionsglas eine Dränageeinrichtung für Bodenglas vorgeschaltet ist.

Zur Lösung der gleichen Aufgabe und mit den gleichen Vorteilen ist eine solche Vorrichtung erfindungsgemäss **dadurch gekennzeichnet, dass**
a) der Innenbelag mindestens im Bereich der Dränageeinrichtung aus einem schmelzgegossenen, elektrisch leitfähigen mineralischen Werkstoff aus der Gruppe der AZS- und der ZAC-Verbindungen besteht, wobei in dem Innenbelag eine Dränageöffnung für das Bodenglas und über dieser Dränageöffnung ein Dränagespalt angeordnet ist, der sich quer zum Fliesskanal erstreckt, und dass
b) mindestens zwei Elektroden auf gegenüber liegenden Seiten des Fliesskanals und der Dränageeinrichtung für das Bodenglas angeordnet sind, die stabförmig ausgebildet und mit ihren Stirnflächen so weit in den Innenbelag in Richtung auf die Glasschmelze eingeführt sind und keinen Kontakt zur Glasschmelze haben, wobei der Innenbelag auch im Bereich der stabförmigen Elektroden aus AZS- oder ZAC-Verbindungen besteht, derart, dass der überwiegende Teil der Stromflüsse durch die Glasschmelze führbar ist und mit einer Elektrodenplatte in Verbindung steht, die unterhalb der Dränageöffnung angeordnet ist.

Es ist im Zuge weiterer Ausgestaltungen der erfindungsgemässen Vorrichtung besonders vorteilhaft, wenn - entweder einzeln oder in Kombination - :
* die gegenüber liegenden Elektroden oberhalb einer Eintrittsöffnung für das Bodenglas angeordnet sind,
* die gegenüber liegenden Elektroden unterhalb einer Eintrittsöffnung für das Bodenglas angeordnet sind,
* oberhalb der Dränageöffnung im Innenbelag ein Dränagespalt ausgebildet ist, der - in Querschnittsrichtung des Fliesskanals gesehen - von der Eintrittsöffnung über zwei Gefällestrecken bis zur Dränageöffnung verengt ist,
* die Gefällestrecken unter einem Winkel "α" zwischen 15 und 45 Grad zur Waagrechten ausgerichtet sind, und/oder, wenn
* die Achsen der Elektroden mit einer waagrechten Richtungskomponente auf die Achse (A-A) ausgerichtet sind, die durch die Dränageöffnung verläuft.

Zwei Ausführungsbeispiele des Erfindungsgegenstandes und deren Wirkungsweisen und weitere Vorteile werden nachfolgend anhand der Figuren 1 bis 6 näher erläutert.

Es zeigen:
- Figur 1: einen vertikalen Mitten-Längsschnitt durch das ofenferne Ende eines Fliesskanals,
- Figur 2: einen vertikalen Querschnitt entlang der Linie II-II in Figur 1 durch ein erstes Ausführungsbeispiel der Erfindung, bei dem die Elektroden oberhalb der Eintrittsöffnung eines Dränage- spalts angeordnet sind,
- Figur 3: einen vertikalen Querschnitt analog Figur 2 durch ein zweites Ausführungsbeispiel der Erfindung, bei dem die Elektroden unterhalb der Eintrittsöffnung eines Dränagespalts angeordnet sind,
- Figur 4: eine perspektivische Ansicht der Bauelemente im Bereich des Dränagespalts und der Dränageöffnung,
- Figur 5: einen vergrösserten Ausschnitt aus Figur 3 im Bereich der Dränageöffnung, und
- Figur 6: ein Diagramm, in dem die spezifischen Widerstände in Ohm x cm für einige schmelzgegossene Werkstoffe wie ZAC 1711 und ZAC 1681 und für einige Glasarten in dem in Frage kommenden Temperaturbereich zwischen 800 und 1500 °C aufgetragen sind.

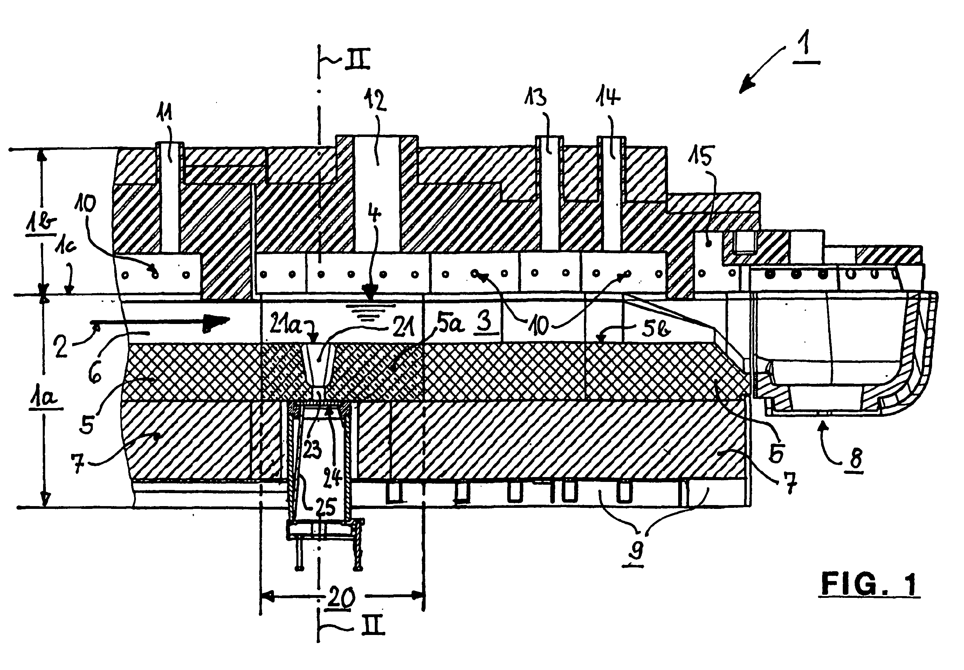

In Figur 1 ist das Ende eines Fliesskanals 1 dargestellt, dessen hier nicht gezeigter Anfang mit einem Glasschmelzofen verbunden ist. Dadurch ist eine Fliessrichtung 2 für die Glasschmelze 3 vorgegeben, die einen Schmelzenspiegel 4 besitzt. Der Fliesskanal 1 besitzt einen glasresistenten Innenbelag 5, 5a, wobei der Innenbelag 5a einen Teilbereich bildet, der aus einem schmelzgegossenen mineralischen Werkstoff aus der Gruppe der AZS- und ZAC Verbindungen besteht.

Hierzu schreibt Dr.-Ing. Illig in "ABC Glas", Deutscher Verlag für Grundstoffindustrie Leipzig, 1991, folgendes: Auf Seite 23: AZS-Steine - Aluminium-Zirkon-Silicat-Steine -> zirkoniumhaltige Feuerfesterzeugnisse. Auf den Seiten 235/236 unter "schmelzgegossene Steine" die besondere Eignung beim Glasschmelzen. Und auf Seite 303, unter "zirconiumhaltige Feuerfesterzeugnisse" die besondere Eignung im Basisbereich von Wannen und Vorherden für Glasschmelzen.

Ferner schreibt W. Trier in "Glasschmelzöfen Konstruktion und Betriebsverhalten", Springer-Verlag, 1984: Seite 66 unter "4.2.4 Schmelzflüssig gegossene Steine" unter Verwendung der Begriffe Korund-Zirkonoxid-Steine (KZ-Steine) gleichfalls die besondere Eignung für elektrisch beheizte Glas-Schmelzwannen aufgrund des relativ niedrigen elektrischen Widerstandes. Bild 4.3. auf Seite 68 zeigt in Diagrammform die Temperaturabhängigkeiten von spezifischen elektrischen Widerständen für Wannensteine und Gläser im Temperaturbereich zwischen 800 und 1500 °C. Die Tabelle 4.4. "Chemische und mineralogische Zusammensetzung, physikalische Eigenschaften schmelzgegossener Steine", Gruppe Korund-Zirkonoxid, auf Seite 67 enthält unter "KZ-Stein" u.a. die Angaben ER 1681 und ER 1711. Anmerkung: Dafür werden auch die Bezeichnungen ZAC 1681 und ZAC 1711 verwendet.

Der Fliesskanal 1 besitzt ein Unterteil 1a und ein Oberteil 1b, die durch eine Trennfuge 1c gegeneinander abgegrenzt sind. Knapp unterhalb dieser Trennfuge 1c befindet sich der Schmelzenspiegel 4. Das Oberteil 1b ist gleichfalls mehrlagig aufgebaut, was aber hier nicht näher erläutert zu werden braucht, und ist durch zwei gegenüberliegende Reihen von Gasbrennern 10 beheizt, die hier nur durch ihre Mündungen angedeutet sind. Es folgen in der Fliessrichtung 2 eine Messöffnung 11, ein Abgaskamin 12 für Brenngase der Gasbrenner 10 und zwei Messöffnungen 13 und 14. Die Messöffnungen können für das Einführen von Pyrometern oder Thermoelementen verwendet werden. Mit 15 ist ein Freiraum für den

Einbau eines Sperrschiebers bezeichnet.

Der Innenbelag 5, 5a besitzt Bodenflächen 5b und zwei gegenüber liegende Seitenwände 6 und ist unten und seitlich von einem Mantel 7 aus einem üblichen mineralischen Wärmedämmstoff umgeben. Am Ende des Fliesskanals 1 befindet sich eine Entnahmestelle 8 für das Produktionsglas, die gegenüber der Bodenfläche 5b abgesenkt angeordnet ist, wobei Steuereinrichtungen für eine kontinuierliche oder portionsweise Abgabe der Glasschmelze weggelassen wurden. Das gesamte Unterteil 1 a des Fliesskanals 1 ist von einen Traggerüst 9 gehalten.

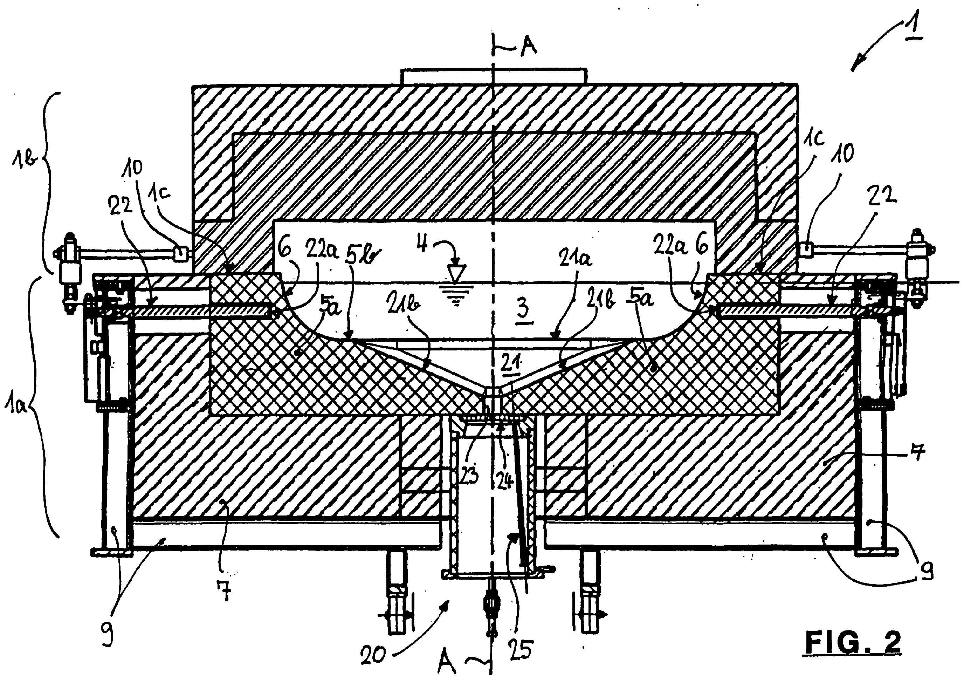

Dieser Entnahmestelle 8 für das Produktionsglas ist eine Dränageeinrichtung 20 für das sogenannte Bodenglas vorgelagert. Wesentliches Element ist ein Dränagespalt 21, der quer zur Fliessrichtung 2 verläuft und eine senkrechte Symmetrieebene II-II besitzt, die in Figur 1 nur angedeutet ist. Varianten des Bauprinzips werden in den Figuren 2, 3, 4 und 5 näher erläutert, in denen die bisherigen Bezugszeichen weiter verwendet werden.

Bei dem Ausführungsbeispiel gemäss Figur 2 sind zwei einander gegenüber liegende waagrechte Elektroden 22 mit ihren Stirnflächen 22a oberhalb der Eintrittsöffnung 21 a des Dränagespalts 21 angeordnet. Von dieser Eintrittsöffnung 21a führen zwei spiegelsymmetrisch verlaufende Gefällestrecken 21 b zu der zylindrischen Dränageöffnung 23, unterhalb welcher eine kreisringförmige Elektrodenplatte 24 mit einer Anschlussleitung 25 angeordnet ist. Die Stirnflächen 22a stehen aufgrund einer Druckfeder am äusseren Ende der Elektroden 22 unter einer Druckkraft. Durch den kurzen Abstand der Stirnflächen 22a gegenüber der Trennfläche zwischen dem Innenbelag 5a und der Glasschmelze 3 fliessen wesentliche Teile der Schmelzströme auf kürzestem Wege zur Glasschmelze 3 und von dort durch den Dränagespalt 21 und durch die Dränageöffnung 23 zur Elektrodenplatte 24.

Da die Glasschmelze in dem für solche Verfahren üblichen Temperaturbereich einen noch geringeren elektrischen Widerstandskoeffizienten besitzt als das Material des Innenbelages 5a bei dessen niedrigerer Temperatur, wird ein beträchtlicher Teil der Stromwärme im Bodenbereich des Fliesskanals 1 und insbesondere innerhalb des Dränagespalts 21 entwickelt, was zu einem deutlich verbesserten Abfluss des störenden zirkonhaltigen Bodenglases führt, dessen Viskosität bei vergleichbaren Temperaturen grösser ist als die Viskosität des Produktionsglases.

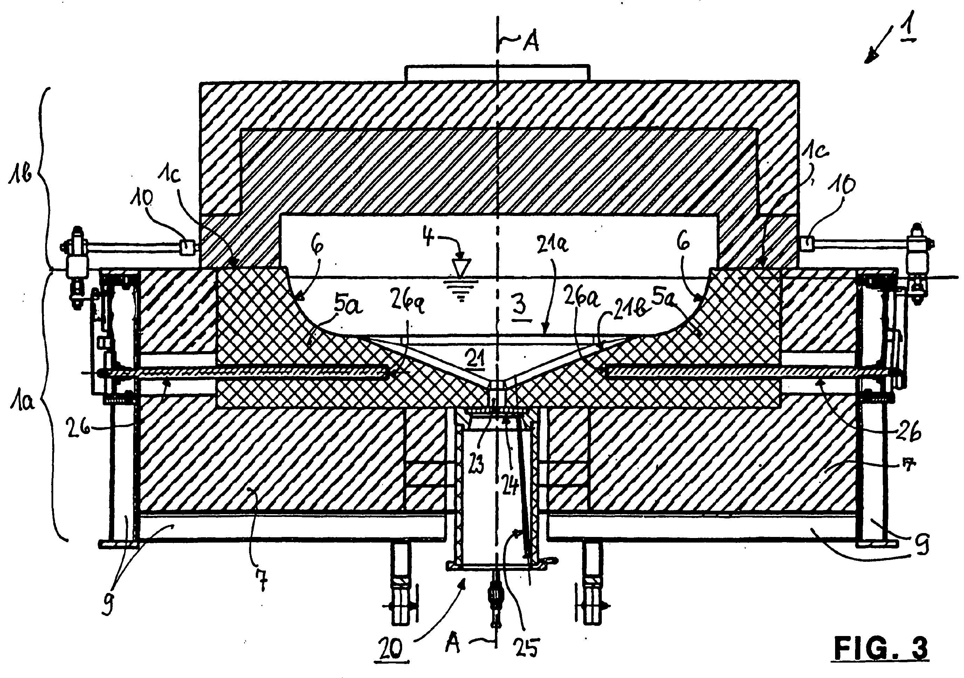

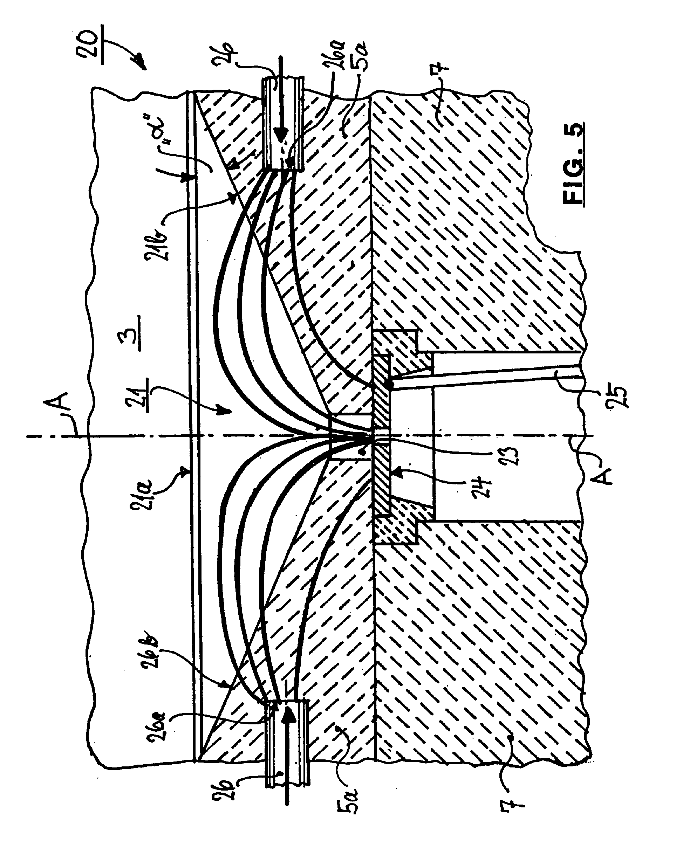

Bei dem Ausführungsbeispiel gemäss den Figuren 3 und 5 sind zwei einander gegenüber liegende waagrechte Elektroden 26 mit ihren Stirnflächen 26a unterhalb der Eintrittsöffnung 21a des Dränagespalts 21 angeordnet. Auch von dieser Eintrittsöffnung 21a führen zwei spiegelsymmetrisch verlaufende Gefällestrecken 21 b zu der zylindrischen Dränageöffnung 23, unterhalb welcher eine kreisringförmige Elektrodenplatte 24 mit einer Anschlussleitung 25 angeordnet ist. Die Stirnflächen 26a stehen aufgrund einer Druckfeder am äusseren Ende der Elektroden 26 unter einer Druckkraft. Durch den kurzen Abstand der Stirnflächen 26a gegenüber der Trennfläche zwischen dem Innenbelag 5a und der Glasschmelze 3 fliessen wesentliche Teile der Schmelzströme auf kürzestem Wege zur Glasschmelze 3 im Dränagespalt 21 und durch die Dränageöffnung 23 zur Elektrodenplatte 24, was in Figur 5 durch dicke Linien dargestellt ist.

Besonders bevorzugt verlaufen die waagrechten Achsen der Elektroden 22 und 26 - jeweils in gleicher Höhe - in der Symmetrieebene II-II (Figur 1), und es versteht sich, dass die Bauprinzipien der Figuren 2 und 3 auch miteinander kombiniert werden können, d.h. dem Dränagespalt 21 würden dann zwei Paare von Elektroden 22 bzw. 26 zugeordnet. Im Prinzip würden die Figuren 2 und 3 zur Deckung gebracht.

Da die Glasschmelze in dem für solche Verfahren üblichen Temperaturbereich einen noch geringeren elektrischen Widerstandskoeffizienten besitzt als das Material des Innenbetages 5a bei dessen niedrigerer Temperatur, wird ein beträchtlicher Teil der Stromwärme innerhalb des Dränagespalts 21 entwickelt, was zu einem deutlich verbesserten Abfluss des störenden, zirkonhaltigen Bodenglases führt, dessen Viskosität bei vergleichbaren Temperaturen grösser ist als die Viskosität des Produktionsglases.

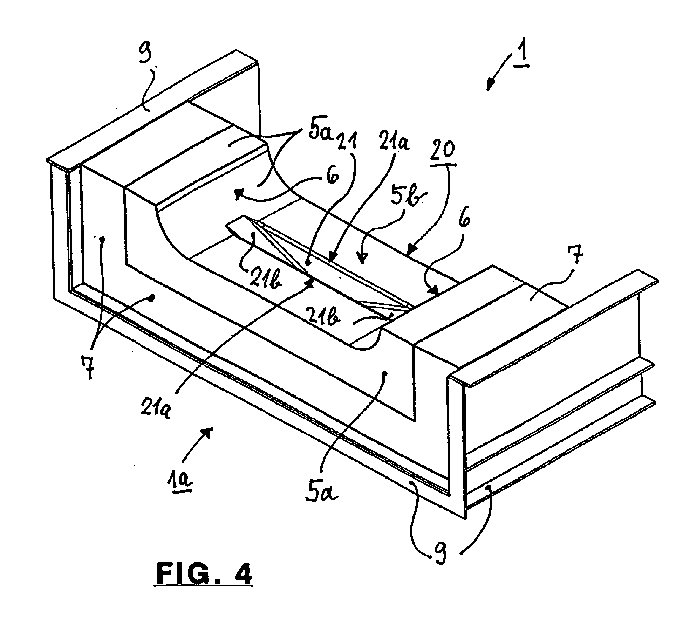

Die Figur 4 zeigt unter Beibehaltung bisheriger Bezugszeichen eine perspektivische Ansicht der Bauelemente im Bereich des Innenbelages 5a mit dem schlitzförmigen Dränagespalt 21 und seiner Eintrittsöffnung 21 a. Es ist zu erkennen, dass die Länge des Dränagespalts 21 quer zur Längs- bzw. Strömungsrichtung des Fliesskanals im wesentlichen so gross ist wie die Breite der waagrechten und ebenen Bodenfläche 5b in der gleichen Richtung. Auf diese Weise ist dem Bodenglas der Weg zur Entnahmestelle 8 für das Produktionsglas versperrt. Die übergänge von der Bodenfläche 5b in die beiden Seitenwände 6 sind gut abgerundet. Ein solcher Innenbelag 5a kann auch als Dränagestein bezeichnet werden.

In Figur 5 ist zusätzlich folgendes dargestellt: Die von den beiden gleichpoligen Elektroden 26 ausgehenden Strompfade sind durch gebogene dicke Linien dargestellt. Die hauptsächliche Stromübertragung auf den Innenbelag 5a erfolgt über die Stirnflächen 26a der in Pfeilrichtung unter Federspannung stehenden Elektroden 26. Da die meisten Glasschmelzen immer noch einen geringeren spezifischen elektrischen Widerstand aufweisen als bei gleicher und niedrigerer Temperatur der Innenbelag 5a, fliesst der grösste Anteil des gesamten Stromes durch die glasseitige Oberfläche des Innenbelags 5a direkt ins Glas 3 und durch dieses in Richtung auf die Dränageöffnung 23 und die Elektrodenplatte 24. Nur ein relativ geringer Anteil des Stromes fliesst durch den Innenbelag 5a. Das Glas, welches sich in unmittelbarer Nähe der Stirnflächen 26a und des Innenbelags 5a befindet und das Glas im Dränagespalt 21 leiten den Strom direkt zur Dränageöffung 23 und zur Elektrodenplatte 24. Der Anstellwinkel "α" der Gefällestrecken 21 b beträgt in der Zeichnung 24 Grad und kann zwischen 15 und 45 Grad gewählt werden.

Dies führt zu folgenden zusätzlichen Vorteilen: Erstens gibt es keine Metallelektroden mehr, die vom Glas umspült und korrodiert werden. Dadurch finden an der Oberfläche der Elektroden keine komplexen Reaktionen statt, die zur Bildung einer Kontaktschicht führen. Diese Schicht besteht aus mehreren Komponenten, hauptsächlich jedoch aus Verbindungen zwischen Molybdän oder Zirkonium und Sauerstoff bzw. Schwefel. Obwohl es sich prinzipiell um dünne Schichten handelt, können Veränderungen in den Betriebsbedingungen dazu führen, dass ein Teil der Schichten abgetragen wird und im Produktionsglas als dunkle Schmiere erscheint. Oft treten bei diesen Reaktionen auch Sauerstoffblasen als zeitgleiche oder Folgeerscheinung auf.

Zweitens sind der Fliesskanal 1 und insbesondere sein Dränagespalt 21 völlig frei von störenden und schädlichen Einbauten, so dass das Bodenglas und seine Schlieren ungehindert auf ganzer Breite und symmetrisch von der Bodenfläche 5b und auch von den Seitenwänden 6 ungehindert zur Dränageöffnung 23 fliessen können.

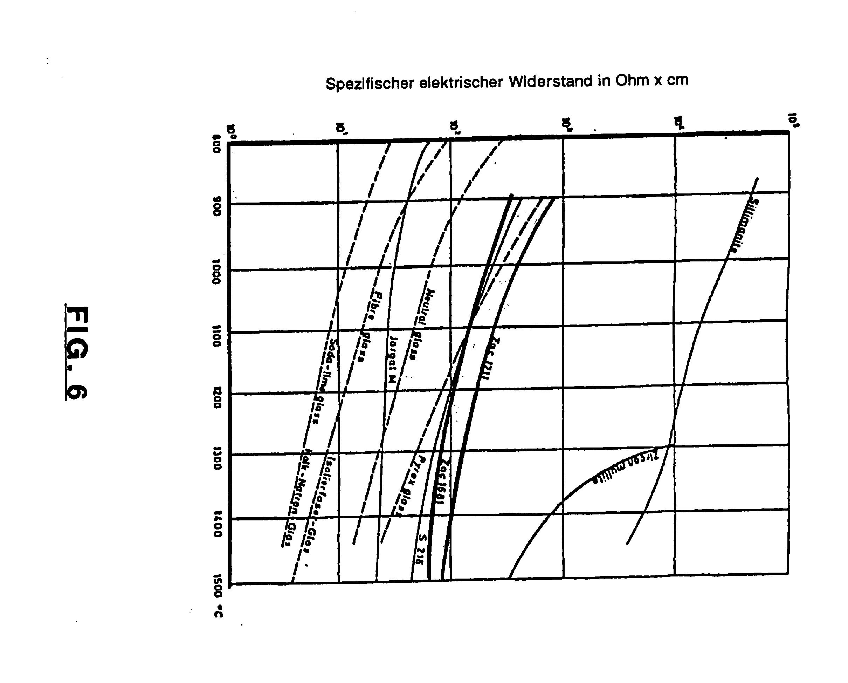

Die Figur 6 zeigt ein Diagramm mit Temperaturwerten von 800 bis 1500 °C auf der Abszisse und Werten für den spezifischen elektrischen Widerstand zwischen 1 und 10⁵ Ohm x cm für verschiedene mineralische Stoffe und Glasarten, die in einem Glasofen vorkommen, auf der Ordinate. Zu beachten ist, das die Ordinate in Zehnerpotenzen unterteilt ist und dass die Kurven für ZAC 1681 und ZAC 1711 sich mit geringerem Abstand oberhalb der Kurven für bestimmte Gläser befinden als andere mineralische Werkstoffe des Glasofenbaus. Die Bezeichnungen ZAC 1681 und ZAC 1711 sind im übrigen analog zu den Angaben von Trier ER 1681 und ER 1711. Im Gegensatz dazu liegen die Werte für Sillimanit und Zirkonmullit um 1 bis 2 Zehnerpotenzen über den genannten Schmelzgegossenen Werkstoffen, so dass nicht mehr von elektrischen Leitern gesprochen werden kann.

Das Material ZAC 1681 besteht aus festen Kristallen, die mit einem "Glas" zusammen gehalten werden. Dieses Glas bildet ca. 20 % der gesamten Steine und ist u.a. für den Hauptanteil der elektrischen Leitfähigkeit verantwortlich. Dies wiederum lässt den Schluss zu, dass der Strom nicht gleichmässig durch einen Stein, sondern durch ein kleines Volumen der Glasphase geleitet wird, die dadurch zwangsläufig etwas stärker aufgeheizt wird als die Hauptmasse des Steins. Aber trotz dieser Tatsache liegen die Temperaturen innerhalb des Innenbelags 5a beim Betrieb weit unter den Temperaturen, bei denen diese Glasphase überhaupt flüssig und beweglich werden könnte.

Kurz gefasst betrifft die Erfindung ein Verfahren und eine Vorrichtung zum

Abzug von Glasschmelze (3) aus Fliesskanälen (1), die zu einer Entnahmestelle (8) für Produktionsglas geführt sind, wobei der Fliesskanal (1) einen glasresistenten Innenbelag (5a) aufweist und wobei der Entnahmestelle (8) für das Produktionsglas eine Dränageeinrichtung (20) für Bodenglas vorgeschaltet ist. Um dabei Heizelektroden (22, 26) der Glasschmelze (3) zu entziehen und dennoch einen örtlichen und zeitlichen Einfluss auf das Temperaturprofil innerhalb des Strömungsquerschnitts nehmen zu können, wird erfindungsgemäss vorgeschlagen, dass
a) der Innenbelag (5a) mindestens im Bereich der Dränageeinrichtung (20) aus einem schmelzgegossenen, elektrisch leitfähigen Werkstoff besteht und eine Dränageöffnung (23) für das Bodenglas und darüber einen Dränagespalt (21) besitzt, und dass
b) mindestens zwei Elektroden (22, 26) auf gegenüber liegenden Seiten des Fliesskanals (1) und der Dränageeinrichtung (20) angeordnet sind, die mit ihren Stirnflächen (22a) so weit in den Innenbelag (5a) in Richtung auf die Glasschmelze (3) eingeführt sind, dass ein wesentlicher Teil der Stromflüsse durch die Glasschmelze (3) geführt wird und eine Elektrodenplatte (24) erreicht.

### Bezugszeichenliste:

- 1: Fliesskanal
- 1 a: Unterteil 1b Oberteil
- 1 c: Trennfuge
- 2: Fliessrichtung
- 3: Glasschmelze
- 4: Schmelzenspiegel
- 5: Innenbelag
- 5a: Innenbelag (Dränagestein)
- 5b: Bodenfläche
- 6: Seitenwände
- 7: Mantel
- 8: Entnahmestelle
- 9: Traggerüst
- 10: Gasbrenner
- 11: Messöffnung

- 12: Abgaskamin
- 13: Messöffnung
- 14: Messöffnung
- 15: Freiraum
- 20: Dränageeinrichtung
- 21: Dränagespalt
- 21 a: Eintrittsöffnung
- 21 b: Gefällestrecken
- 22: Elektroden
- 22a: Stirnflächen
- 23: Dränageöffnung
- 24: Elektrodenplatte
- 25: Anschlussleitung
- 26: Elektroden
- 26a: Stirnflächen

## Patentansprüche

1. Verfahren zum Abzug von Glasschmelze (3) aus Fliesskanälen (1), die zum Transport von Produktionsglas von einem Schmelzofen zu einer Entnahmestelle (8) für das Produktionsglas geführt sind, wobei der Fliesskanal (1) einen glasresistenten Innenbelag (5, 5a) aufweist, der auf seiner Aussenseite von einem Mantel (7) aus einem mineralischen Wärmedämmstoff umgeben ist, und wobei der Entnahmestelle (8) für das Produktionsglas eine Dränageeinrichtung (20) für Bodenglas vorgeschaltet ist,
**dadurch gekennzeichnet, dass**
a) der Innenbelag (5a) mindestens im Bereich der Dränageeinrichtung (20) aus einem schmelzgegossenen, elektrisch leitfähigen mineralischen Werkstoff aus der Gruppe der AZS-(Aluminium-Zirkon-Silikat) und der ZAC-Verbindungen besteht, wobei in dem Innenbelag (5a) eine Dränageöffnung (23) für das Bodenglas und über dieser Dränageöffnung (23) ein Dränagespalt (21) angeordnet ist, der sich quer zur Fliessrichtung (2) erstreckt, und dass
b) mindestens zwei Elektroden (22, 26) auf gegenüber liegenden Seiten des Fliesskanals (1) und der Dränageeinrichtung (20) für das Bodenglas angeordnet sind, die stabförmig ausgebildet und mit ihren Stirnflächen (22a, 26a) so weit in den Innenbelag (5a) in Richtung auf die Glasschmelze (3) eingeführt sind und keinen Kontakt zur Glasschmelze haben, wobei der Innenbelag (5a) auch im Bereich der stabförmigen Elektroden (22, 26) aus AZS-(Aluminium-Zirkon-Silikat) oder ZAC-Verbindungen besteht, derart, dass der überwiegende Teil der Stromflüsse durch die Glasschmelze (3) geführt wird und eine Elektrodenplatte (24), die unterhalb der Dränageöffnung (23) angeordnet ist, auf diesem Wege erreicht, derart, dass das Bodenglas stärker beheizt wird als das darüber befindliche Produktionsglas.

2. Verfahren nach Anspruch 1, **dadurch gekennzeichnet, dass** die gegenüber liegenden Elektroden (22) oberhalb einer virtuellen waagrechten Ebene angeordnet sind, in der im Fliesskanal (1) eine Phasengrenze zwischen dem Produktionsglas und dem Bodenglas gehalten wird.

3. Verfahren nach Anspruch 1, **dadurch gekennzeichnet, dass** die gegenüber liegenden Elektroden (26) unterhalb einer virtuellen waagrechten Ebene angeordnet sind, in der im Fliesskanal (1) eine Phasengrenze zwischen dem Produktionsglas und dem Bodenglas gehalten wird.

4. Vorrichtung für den Abzug von Glasschmelze (3) aus Fliesskanälen (1), die zum Transport von Produktionsglas von einem Schmelzofen zu einer Entnahmestelle (8) für das Produktionsglas geführt sind, wobei der Fliesskanal (1) einen glasresistenten Innenbelag (5, 5a) aufweist, der auf seiner Aussenseite von einem Mantel (7) aus einem mineralischen Wärmedämmstoff umgeben ist, und wobei der Entnahmestelle (8) für das Produktionsglas eine Dränageeinrichtung (20) für Bodenglas vorgeschaltet ist,
**dadurch gekennzeichnet, dass**
a) der Innenbelag (5a) mindestens im Bereich der Dränageeinrichtung (20) aus einem schmelzgegossenen, elektrisch leitfähigen mineralischen Werkstoff aus der Gruppe der AZS-(Aluminium-Zirkon-Silikat) und der ZAC-Verbindungen besteht, wobei in dem Innenbelag (5a) eine Dränageöffnung (23) für das Bodenglas und über dieser Dränageöffnung (23) ein Dränagespalt (21) angeordnet ist, der sich quer zum Fliesskanal (1) erstreckt,
b) mindestens zwei Elektroden (22, 26) auf gegenüber liegenden Seiten des Fliesskanals (1) und der Dränageeinrichtung (20) für das Bodenglas angeordnet sind, die stabförmig ausgebildet und mit ihren Stirnflächen (22a, 26a) so weit in den Innenbelag (5a) in Richtung auf die Glasschmelze (3) eingeführt sind und keinen Kontakt zur Glasschmelze haben, wobei der Innenbelag (5a) auch im Bereich der stabförmigen Elektroden (22, 26) aus AZS-(Aluminium-Zirkon-Silikat) oder ZAC-Verbindungen besteht, derart, dass der überwiegende Teil der Stromflüsse durch die Glasschmelze (3) führbar ist und mit einer Elektrodenplatte (24) in Verbindung steht, die unterhalb der Dränageöffnung (23) angeordnet ist.

5. Vorrichtung nach Anspruch 4, **dadurch gekennzeichnet, dass** die gegenüber liegenden Elektroden (22) oberhalb einer Eintrittsöffnung (21a) für das Bodenglas angeordnet sind.

6. Vorrichtung nach Anspruch 4, **dadurch gekennzeichnet, dass** die gegenüber liegenden Elektroden (26) unterhalb einer Eintrittsöffnung (21a) für das Bodenglas angeordnet sind.

7. Vorrichtung nach Anspruch 4, **dadurch gekennzeichnet, dass** oberhalb der Dränageöffnung (23) im Innenbelag (5a) ein Dränagespalt (21) ausgebildet ist, der - in Querschnittsrichtung des Fliesskanals (1) gesehen - von der Eintrittsöffnung (21a) über zwei Gefällestrecken (21 b) bis zur Dränageöffnung (23) verengt ist.

8. Vorrichtung nach Anspruch 7, **dadurch gekennzeichnet, dass** die Gefällestrecken (21 b) unter einem Winkel "α" zwischen 15 und 45 Grad zur Waagrechten ausgerichtet sind.

9. Vorrichtung nach Anspruch 4, **dadurch gekennzeichnet, dass** die Achsen der Elektroden (22, 26) mit einer waagrechten Richtungskomponente auf die Achse (A-A) ausgerichtet sind, die durch die Dränageöffnung (23) verläuft.

## Claims

1. A method of drawing off glass melt (3) from flow channels (1) run from a melting furnace to a removal point (8) for production glass in order to transport the production glass, wherein the flow channel (1) has a glass-resistant inner coating (5, 5a) surrounded on its exterior by a casing (7) of a mineral heat insulator, and wherein a drainage device (20) for bottom glass is connected upstream of the removal point (8) for the production glass, **characterised in that**
a. the inner coating (5a) is, at least in the region of the drainage device (20), made of a fusion-cast, electrically conductive, mineral material from the group of AZS (aluminium-zircon-silicate) and ZAC compounds, wherein in the inner coating (5a) there is arranged a drainage opening (23) for the bottom glass and above this drainage opening (23) there is arranged a drainage aperture (21) extending transversely to the flow direction (2), and **in that**
b. at least two electrodes (22, 26) are arranged on opposite sides of the flow channel (1) and the drainage device (20) for the bottom glass, which electrodes are rod-shaped and whose end surfaces (22a, 26a) are introduced into the inner coating (5a) in the direction of the glass melt (3) to such an extent and have no contact with the glass melt in such a manner that, the inner coating (5a) also being made of AZS (aluminium-zircon-silicate) or ZAC compounds in the region of the rod-shaped electrodes (22, 26), the predominant part of the current flows is guided through the glass melt (3) and in this way reaches an electrode plate (24), arranged below the drainage opening (23), in such a manner that the bottom glass is heated more than the production glass located thereabove.

2. A method according to claim 1, **characterised in that** the facing electrodes (22) are arranged above a virtual horizontal plane in which, in the flow channel (1), a phase boundary between the production glass and the bottom glass is kept.

3. A method according to claim 1, **characterised in that** the facing electrodes (26) are arranged below a virtual horizontal plane in which, in the flow channel (1), a phase boundary between the production glass and the bottom glass is kept.

4. A device for the drawing off of glass melt (3) from flow channels (1) run from a melting furnace to a removal point (8) for production glass in order to transport the production glass, wherein the flow channel (1) has a glass-resistant inner coating (5, 5a) surrounded on its exterior by a casing (7) of a mineral heat insulator, and wherein a drainage device (20) for bottom glass is connected upstream of the removal point (8) for the production glass, **characterised in that**
a. the inner coating (5a) is, at least in the region of the drainage device (20), made of a fusion-cast, electrically conductive, mineral material from the group of AZS (aluminium-zircon-silicate) and ZAC compounds, wherein in the inner coating (5a) there is arranged a drainage opening (23) for the bottom glass and above this drainage opening (23) there is arranged a drainage aperture (21) extending transversely to the flow channel (1),
b. at least two electrodes (22, 26) are arranged on opposite sides of the flow channel (1) and the drainage device (20) for the bottom glass, which electrodes are rod-shaped and whose end surfaces (22a, 26a) are introduced into the inner coating (5a) in the direction of the glass melt (3) to such an extent and have no contact with the glass melt in such a manner that, the inner coating (5a) also being made of AZS (aluminium-zircon-silicate) or ZAC compounds in the region of the rod-shaped electrodes (22, 26), the predominant part of the current flows can be guided through the glass melt (3) and is connected to an electrode plate (24) arranged below the drainage opening (23).

5. A device according to claim 4, **characterised in that** the facing electrodes (22) are arranged above an inlet (21 a) for the bottom glass.

6. A device according to claim 4, **characterised in that** the facing electrodes (26) are arranged below an inlet (21 a) for the bottom glass.

7. A device according to claim 4, **characterised in that** in the inner coating (5a), a drainage aperture (21) is formed above the drainage opening (23), which drainage aperture (21) - viewed in the cross-sectional direction of the flow channel (1) - narrows from the inlet (21 a) to the drainage opening (23) via two downward inclines (21 b).

8. A device according to claim 7, **characterised in that** the downward inclines (21 b) are directed at an angle "α" between 15 and 45 degrees to the horizontal.

9. A device according to claim 4, **characterised in that** the axes of the electrodes (22, 26) are directed with a horizontal direction component at the axis (A-A) running through the drainage opening (23).

## Revendications

1. Procédé pour le soutirage de verre en fusion (3) à partir de canaux d'écoulement (1) qui, pour le transport de verre de production, mènent d'un four de fusion à un point de prélèvement (8) pour le verre de production, le canal d'écoulement (1) présentant un revêtement intérieur (5, 5a) résistant au verre, qui, sur son côté extérieur, est entouré par une enveloppe (7) en un matériau d'isolation thermique minéral, et un dispositif de drainage (20) pour du verre de fond de coulée étant placé en amont du point de prélèvement (8) pour le verre de production,
**caractérisé**
a) **en ce que** le revêtement intérieur (5a) est constitué, au moins dans la zone du dispositif de drainage (20), d'un matériau minéral coulé par fusion, électriquement conducteur, faisant partie du groupe des composés AZS (aluminium-zircone-silice) et ZAC, et dans le revêtement intérieur (5a) est agencée une ouverture de drainage (23) pour le verre de fond de coulée, et au-dessus de cette ouverture de drainage (23) est agencée une fente de drainage (21) qui s'étend transversalement à la direction d'écoulement (2), et
b) **en ce qu'**au moins deux électrodes (22, 26) sont agencées sur des côtés opposés du canal d'écoulement (1) et du dispositif de drainage (20) pour le verre de fond de coulée, et ces électrodes sont réalisées sous forme de barreau et insérées, avec leurs surfaces frontales (22a, 26a), dans le revêtement intérieur (5a), en direction du verre en fusion (3) sans être en contact avec le verre en fusion, le revêtement intérieur (5a) étant également constitué, dans la zone des électrodes (22, 26) en forme de barreau, de composés AZS (aluminium-zircone-silice) et ZAC, la profondeur d'insertion étant telle que la partie prépondérante des flux de courant soit menée à travers le verre en fusion (3) et atteigne par cette voie une plaque d'électrode (24), qui est agencée sous l'ouverture de drainage (23), de façon telle que le verre de fond de coulée soit chauffé plus fortement que le verre de production se trouvant au-dessus.

2. Procédé selon la revendication 1, **caractérisé en ce que** les électrodes (22) mutuellement opposées sont agencées au-dessus d'un plan horizontal virtuel, dans lequel on maintient, à l'intérieur du canal d'écoulement (1), une limite ou transition de phase entre le verre de production et le verre de fond de coulée.

3. Procédé selon la revendication 1, **caractérisé en ce que** les électrodes (26) mutuellement opposées sont agencées en-dessous d'un plan horizontal virtuel, dans lequel on maintient, à l'intérieur du canal d'écoulement (1), une limite ou transition de phase entre le verre de production et le verre de fond de coulée.

4. Dispositif de soutirage de verre en fusion (3) à partir de canaux d'écoulement (1) qui, pour le transport de verre de production, mènent d'un four de fusion à un point de prélèvement (8) pour le verre de production, le canal d'écoulement (1) présentant un revêtement intérieur (5, 5a) résistant au verre, qui, sur son côté extérieur, est entouré par une enveloppe (7) en un matériau d'isolation thermique minéral, et un dispositif de drainage (20) pour du verre de fond de coulée étant placé en amont du point de prélèvement (8) pour le verre de production,
**caractérisé en ce que**
a) le revêtement intérieur (5a) est constitué, au moins dans la zone du dispositif de drainage (20), d'un matériau minéral coulé par fusion, électriquement conducteur, faisant partie du groupe des composés AZS (aluminium-zircone-silice) et ZAC, et dans le revêtement intérieur (5a) est agencée une ouverture de drainage (23) pour le verre de fond de coulée, et au-dessus de cette ouverture de drainage (23) est agencée une fente de drainage (21) qui s'étend transversalement au canal d'écoulement (1), et
b) au moins deux électrodes (22, 26) sont agencées sur des côtés opposés du canal d'écoulement (1) et du dispositif de drainage (20) pour le verre de fond de coulée, et ces électrodes sont réalisées sous forme de barreau et insérées, avec leurs surfaces frontales (22a, 26a), dans le revêtement intérieur (5a), en direction du verre en fusion (3) sans être en contact avec le verre en fusion, le revêtement intérieur (5a) étant également constitué, dans la zone des électrodes (22, 26) en forme de barreau, de composés AZS (aluminium-zircone-silice) et ZAC, la profondeur d'insertion étant telle que la partie prépondérante des flux de courant puisse être menée à travers le verre en fusion (3) et soit en liaison avec une plaque d'électrode (24), qui est agencée sous l'ouverture de drainage (23).

5. Dispositif selon la revendication 4, **caractérisé en ce que** les électrodes (22) mutuellement opposées sont agencées au-dessus d'une ouverture d'entrée (21a) pour le verre de fond de coulée.

6. Dispositif selon la revendication 4, **caractérisé en ce que** les électrodes (26) mutuellement opposées sont agencées en-dessous d'une ouverture d'entrée (21a) pour le verre de fond de coulée.

7. Dispositif selon la revendication 4, **caractérisé en ce qu'**au-dessus de l'ouverture de drainage (23), dans le revêtement intérieur (5a), est formée une fente de drainage (21), qui, vu dans la direction de section transversale du canal d'écoulement (1), se rétrécit de l'ouverture d'entrée (21a) jusqu'à l'ouverture de drainage (23), par l'intermédiaire de deux parcours en déclivité (21b).

8. Dispositif selon la revendication 7, **caractérisé en ce que** les parcours en déclivité (21b) sont orientés selon un angle "α" entre 15 et 45 degrés par rapport à l'horizontale.

9. Dispositif selon la revendication 4, **caractérisé en ce que** les axes des électrodes (22, 26) sont orientés, avec une composante de direction horizontale, vers l'axe (A-A) qui passe par l'ouverture de drainage (23).
